Europäisches Patentamt

European Patent Office

Office européen des brevets

(11) Veröffentlichungsnummer : **0 218 181 B1**

# EUROPÄISCHE PATENTSCHRIFT

(45) Veröffentlichungstag der Patentschrift :
06.02.91 Patentblatt 91/06

(51) Int. Cl.⁵ : **H04L 25/03, H04B 7/005**

(21) Anmeldenummer : **86113479.9**

(22) Anmeldetag : **01.10.86**

(54) Adaptiver Transversalentzerrer.

(30) Priorität : 03.10.85 DE 3535390

(43) Veröffentlichungstag der Anmeldung :
15.04.87 Patentblatt 87/16

(45) Bekanntmachung des Hinweises auf die
Patenterteilung :
06.02.91 Patentblatt 91/06

(84) Benannte Vertragsstaaten :
AT CH DE ES FR GB GR IT LI NL SE

(56) Entgegenhaltungen :
US-A- 4 468 786
IBM JOURNAL OF RESEARCH AND
DEVELOPMENT, Band 9, Nr. 4, Juli 1965,
Seiten 228-232, New York, US; E. GOROG: "A
new approach to time-domain equalization"
ICC '71, CONFERENCE RECORD OF THE 1971
IEEE INTERNATIONAL CONFERENCE ON
COMMUNICATIONS, 14.-16. Juni 1971,
Montreal, Kanada, Seiten 21-8 - 21-13, IEEE,
New York, US; R.J. KEELER: "Construction
and evaluation of a decision feedback
equalizer"

(56) Entgegenhaltungen :
CSELT RAPPORTI TECNICI, Band 3, Nr. 4,
Dezember 1975, Seiten 53-61, Torino, IT; R.
DOGLIOTTI et al.: "Generalized decision
feedback receiver for PSK and APSK signals"
ICC'84, CONFERENCE RECORD OF THE IEEE
INTERNATIONAL CONFERENCE ON
COMMUNICATIONS, 14.-17. Mai 1984,
Amsterdam, NL, Seiten 993-997, IEEE, New
York, US; L. MORENO et al.: "Adaptive
equalization structures in high capacity digital
radio: predicted and observed outage
performance"

(73) Patentinhaber : Siemens Aktiengesellschaft
Wittelsbacherplatz 2
D-8000 München 2 (DE)

(72) Erfinder : Sebald, Georg, Dipl.-Ing.
Marienstrasse 2
D-8000 München 2 (DE)
Erfinder : Lankl, Berthold, Dipl.-Ing.
Mangoldstrasse 1
D-8910 Landsberg/Lech (DE)
Erfinder : Nossek, Josef A., Dr.
Waldstrasse 17
D-8127 Iffeldorf (DE)

Anmerkung : Innerhalb von neun Monaten nach der Bekanntmachung des Hinweises auf die Erteilung
des europäischen Patents kann jedermann beim Europäischen Patentamt gegen das erteilte europäische Patent Einspruch einlegen. Der Einspruch ist schriftlich einzureichen und zu begründen. Er gilt
erst als eingelegt, wenn die Einspruchsgebühr entrichtet worden ist (Art. 99(1) Europäisches Patentübereinkommen).

## Beschreibung

Die Erfindung bezieht sich auf einen adaptiven Transversalentzerrer, bestehend aus einer Anzahl von in Kette geschalteten Verzögerungsgliedern mit jeweils einer Verzögerungszeit T entsprechend dem Abstand zweier aufeinanderfolgender gesendeter Zeichen und mit zwischen die Verzögerungsglieder und die Eingänge eines Summierer angeschlossenen (m+n+1) Stellgliedern, deren Stellgrößen (Koeffizienten) vom Ausgangssignal des Entscheiders abgeleitet werden, wobei m die Zahl der negativindizierten Stellglieder (Vorläufer, precursors) und n die Zahl der positiv-indizierten Stellglieder (Nachläufer, postcursors) angibt, sowie mit einem ebenfalls linearen Hauptabgriff, die nach dem Zero-Forcing-Algorithmus eingestellt werden, oder bestehend aus der äquivalenten Anordnung, bei der an die Stellglieder das Eingangssignal parallel angelegt wird und die Ausgangssignale der Stellglieder im Abstand von T in die Laufzeitkette eingespeist werden. Ein solcher Entzerrer ist beispielsweise durch die DT 21 33 037 B2 bekannt.

Bei Digital-Richtfunk-Systemen mit vielstufiger Quadraturamplitudenmodulation (z. B. 16 QAM, 64 QAM, ...) und hoher Datenrate (140 Mbit/s) werden adaptive Entzerrer im Zeitbereich als wirksames Mittel gegen die durch Mehrwegeausbreitung hervorgerufenen linearen Verzerrungen eingesetzt. Dafür vorgesehene lineare Transversalentzerrer haben zwar ein gutes Akquisitionsverhalten und gute Konvergenzeigenschaften, jedoch sind diese Vorteile gegen die unvermeidlichen Nachteile, nämlich Rauschanhebung durch lineare Entzerrung bzw. mäßiger Performance-Anstieg bei Entzerrerverlängerung abzuwägen. Die sog. Decision Feedback Equalizer, Entzerrer mit quantisierter Rückkopplung, besitzen zumindest im Fall minimalphasiger Verzerrungen bei geringer Koeffizientenzahl bereits eine beachtliche Entzerrungsfähigkeit, ihr Nachteil liegt jedoch in der rekursiven Systemen innewohnenden Fehlerfortpflanzung und den schlechteren Akquisitionseigenschaften.

Ein adaptiver Transversalentzerrer der eingangs beschriebenen Art ist ferner aus dem Artikel "Construction and evaluation of a decision feedback equalizer" von R. J. Keeler aus ICC '71 Conference record of the 1971 IEEE International Conference on Communications, 14. - 16. Juni 1971, Montreal, Kanada, Seiten 21 -8 - 21-13, IEEE, New York, US bekannt. Bei diesem decision feedback equalizer handelt es sich um eine Anwendung im Sprachband (voice band), d. h. extrem niedrige Datenrate. Probleme, die sich bei hohen Datenraten bei der Realisierung der kurzen Laufzeit in der ersten Rückkopplungschleife ergeben, stellen sich hierbei nicht.

Eine decision feedback-Anordnung der Klassischen Art beschreibt auch der Artikel "A new approach to time-domain equalization" von E. Gorog, erschienen im Journal of Research and Development, Band 9, Nr. 4, Juli 1965, Seiten 228-232, New York, US. Es wird auch hierbei nicht auf die Probleme der Schleifenlaufzeit und Restbitfehlerrate eingegangen.

Der Erfindung liegt die Aufgabe zugrunde, einen insbesondere für Digital-Richtfunk-Systeme mit vielstufiger Quadraturamplitudenmodulation und hoher Datenrate geeigneten adaptiven Entzerrer einfachen Aufbaus zu schaffen.

Diese Aufgabe wird gemäß der Erfindung in der Weise gelöst, daß mindestens ein bzw. i zusätzliche positiv-indizierte entscheidungsrückgekoppelte Koeffizienten im Anschluß an den Zugriffsbereich des linearen Transversalfilters vorgesehen sind, dessen bzw. deren Schleifenlaufzeit(en) (n+j) T mit j = 1, ...i entsprechen, worin m eine ganze Zahl ≥ 0 ist, i eine ganze Zahl ≥ 1 und n eine ganze Zahl ≥ 1.

In vorteilhafter Weiterbildung des Erfindungsgegenstandes ist vorgesehen, daß bei seiner Ausbildung als komplexer Transversalentzerrer mit gleichartig ausgebildeten Entzerrern im I- und Q-Kanal Rückkopplungspfade vom Entscheiderausgang jedes Kanals zum betreffenden Stellglied des eigenen und des anderen Kanals Nachstehend wird die Erfindung anhand von in der Zeichnung dargestellten Ausführungsbeispielen näher erläutert.

Es zeigen

Figuren 1a bis d Impulsdiagramme zur Erläuterung des Entzerrungsvorganges,

Figur 2 einen einkanaligen adaptiven Transversalentzerrer mit Serieneingang und Parallelausgang und

Figur 3 einen adaptiven komplexen Transversalentzerrer mit Paralleleingang und Serienausgang.

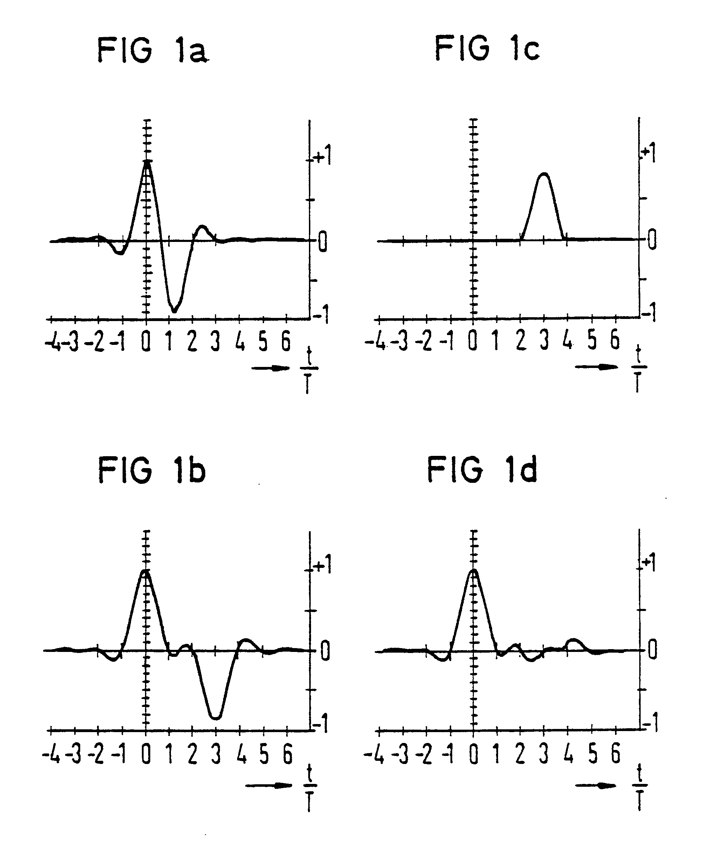

Der Entzerrungsvorgang wird anhand der Impulsdiagramme nach Figur 1 erläutert. Es wird dabei die Basisbandimpulsantwort eines QAM-Systems bei Zweiwege-Ausbreitung und bei Verwendung eines linearen Transversalentzerrers mit Zero-Forcing-Algorithmus betrachtet.

Figur 1a zeigt den Verlauf der durch ein kräftiges, um 6,3 ns verzögertes Echo der Impulsantwort eines Nyquistsystems mit $\ell$=0,5 und 35 Mbaud Schrittgeschwindigkeit. Dieser Impuls wird zunächst durch einen linearen Transversalentzerrer mit fünf (komplexen) Koeffizienten mit Hilfe des Zero-Forcing-Algorithmus entzerrt. Den entzerrten Impuls A zeigt Figur 1b, in der die erwarteten Soll-Nullstellen im Zugriffsbereich des Entzerrers deutlich zu sehen sind. Wichtig ist, daß die restliche Intersymbolstörung ISI (Inter Symbol Interference) im wesentlichen auf einen Taktzeitpunkt (nach dem Zugriffsbereich bei minimalphasigem und davor bei nicht minimalphasigem Kanal) konzentriert auftritt. Dies ist in Figur 1b gut erkennbar, wo die Rest-ISI hauptsächlich bei +3 auf der Zeitachse auftritt. Bei einer Entzerrerverlängerung wird diese Rest-ISI im Taktraster hinausgeschoben und dabei nur unwesentlich kleiner. Erfindungsgemäß wird die im wesentlichen an einem Taktzeitpunkt konzentrierte Rest-ISI ,durch einen entscheidungsgesteuerten rekursiven Pfad eliminiert und damit die Entzerrungsfähigkeit erheblich gesteigert. Hierzu wird dem linearen Transversalfilter mit fünf Koeffizienten ein entscheidungsrückgekoppelter Koeffizient hinzugefügt. Der Korrekturimpuls B an der Stelle +3 auf der Zeitachse eliminiert die Rest-ISI fast vollständig (vgl.Fig.1c,1d)

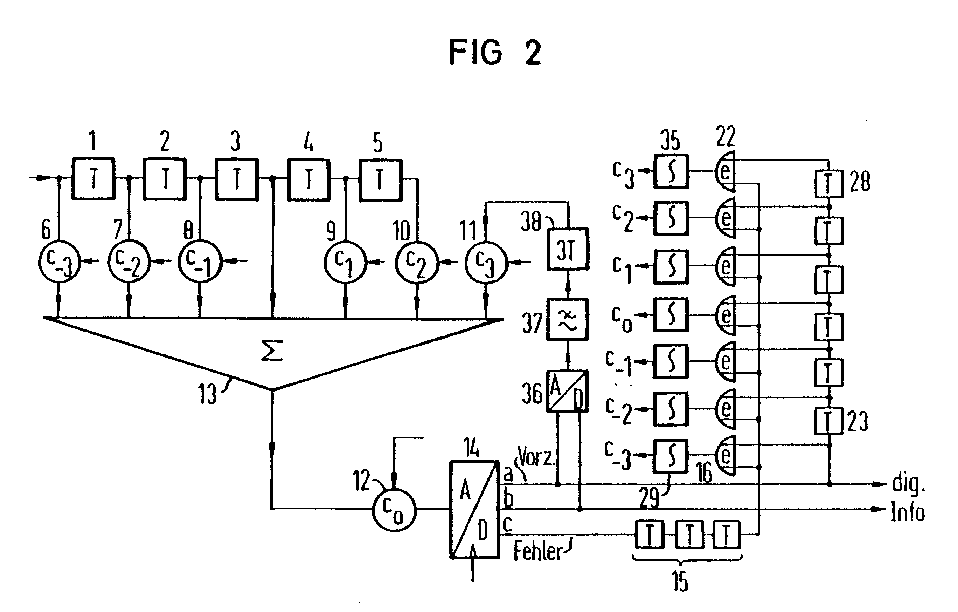

Figur 2 zeigt das Schaltbild eines reellen einkanaligen linearen adaptiven Transversalentzerrers (Serial In/Parallel Out) für ein 4-stufiges Basisbandsignal, der nach dem Zero-Forcing-Algorithmus adaptiert wird.

Entzerrer mit einer Korrelationseinrichtung gemäß dem sog. Zero-Forcing-Algorithmus sind wegen der hohen Datenrate und der speziellen Natur des Richtfunkkanals, nämlich wenige, aber heftige Echos mit relativ kurzer Differenzlaufzeit, für Digital-Richtfunk-Systeme besonders günstig. Der adaptive Transversalentzerrer nach Figur 2 besteht aus einer Anzahl von in Kette geschalteten Verzögerungsgliedern 1 bis 5 mit jeweils einer Verzögerungszeit T entsprechend dem Abstand zweier aufeinanderfolgender gesendeter Zeichen und aus Einstellgliedern, die an die Ein- bzw. Ausgänge der Verzögerungsglieder angeschlossen und mit den Eingängen eines Summierers 13 verbunden sind. Die Stellglieder mit den positiven Koeffizienten $c_1$, $c_2$, $c_3$ sind mit 9, 10, 11 bezeichnet, die mit den negativen Koeffizienten $c_{-3}$, $c_{-2}$ und $c_{-1}$ mit 6, 7, 8. Das Stellglied 12 mit dem Koeffizienten $c_0$ ist im Ausgangsweg des Summierers 13 eingeschaltet und ausgangsseitig an einen als Entscheider wirkenden A/D-Wandler 14 angeschlossen. Der A/D-Wandler 14 weist drei Ausgänge a, b, c auf für digitale Information und Fehlerbits. Aus diesen Ausgangssignalen des A/D-Wandlers 14 werden zugleich die Stellgrößen (Koeffizienten) für die Einstellglieder 6 bis 12 abgeleitet. Hierfür ist der Ausgang c über drei Verzögerungsglieder 15 mit jeweils einem Eingang von 7 Eclusiv-ODER-Gattern 16-22 verbunden, deren zweiter Eingang jeweils mit dem Ausgang a des A/D-Wandlers 14 verbunden ist, wobei zwischen den Exclusiv-ODER-Gattern 16-22 jeweils ein Verzögerungsglied 23-28 eingeschaltet ist. Mit den Exclusiv-ODER-Gattern 16-22 und den Integratoren 29-35 wird die Korrelation zwischen Fehler und Vorzeichenbits ermittelt. Die Ausgänge der Exclusiv -ODER-Gatter sind mit den Eingängen der Integratoren verbunden, die wiederum die Koeffizienten $c_0$, $c_1$, $c_2$, $c_3$, $c_{-1}$, $c_{-2}$, $c_{-3}$, d.h. die Multiplikationsfaktoren der Stellglieder 6 bis 12 liefern. Von den beiden Ausgängen a und b des A/D-Wandlers 14 ist ein Rückkopplungspfad zum Einstellglied 11 mit dem Koeffizienten $c_3$ geführt, der

einen D/A-Wandler 36, einen Tiefpaß 37 und ein Verzögerungsglied 38 mit der Verzögerungszeit 3T enthält. Über diesen entscheidungsgesteuerten rekursiven Pfad wird ein Korrekturimpuls erzeugt, der die Rest-ISI weitgehend eliminiert, wie dies vorstehend anhand der Impulsdiagramme erläutert wurde.

Die erfindungsgemäße Schaltung nutzt dabei die Vorteile linearer Transversalentzerrer aus, die sowohl im Konzept als auch im Realisierungsbereich liegen und in einem guten Akquisitionsverhalten und guten Konvergenzeigenschaften sowie einer einfachen Realisierung bestehen.

Im Demodulator eines QAM-Systems ist die Trägerrückgewinnung erforderlich, die vorteilhafterweise nach dem Entzerrer angeordnet wird, um dessen Entzerrungsleistung mit ausnutzen zu können. Ein Einrasten der Trägerrückgewinnungsphasenregelschleife auch bei linearen Verzerrungen (Mehrwegeausbreitung), wird durch einen Entzerrer unterstützt, der in der Lage ist, auch bei ausgerasteter Trägerregelschleife zu konvergieren.

Transversalfilter sind hier reinen Decision-feedback-equalizern überlegen (Fehlerfortpflanzung etc.), die erst nach Einrasten der Trägerschleife günstige Konvergenzeigenschaften aufweisen. Somit wird erfindungsgemäß durch den linearen Transversalfilterteil eine Entzerrung bewirkt, die es der Trägerregelschleife ermöglicht, auch bei verhältnismäßig starken Mehrwegeverzerrungen einzurasten. Der um eine Symbolperiode außerhalb des Zugriffbereichs des linearen Transversalfilters liegende Hauptbeitrag zur Rest-ISI wird (nach Einrasten der Trägerregelschleife) durch den entscheidungsrückgekoppelten Korrekturimpuls beseitigt. Dies ist jedoch nur im Falle minimalphasiger Verzerrung möglich.

Der Vorteil der erfindungsgemäßen Schaltung im Realisierungsbereich liegt darin, daß die Laufzeit der entscheidungsrückgekoppelten Pfade größer als eine Symbolperiode ist und damit Laufzeitprobleme umgangen werden.

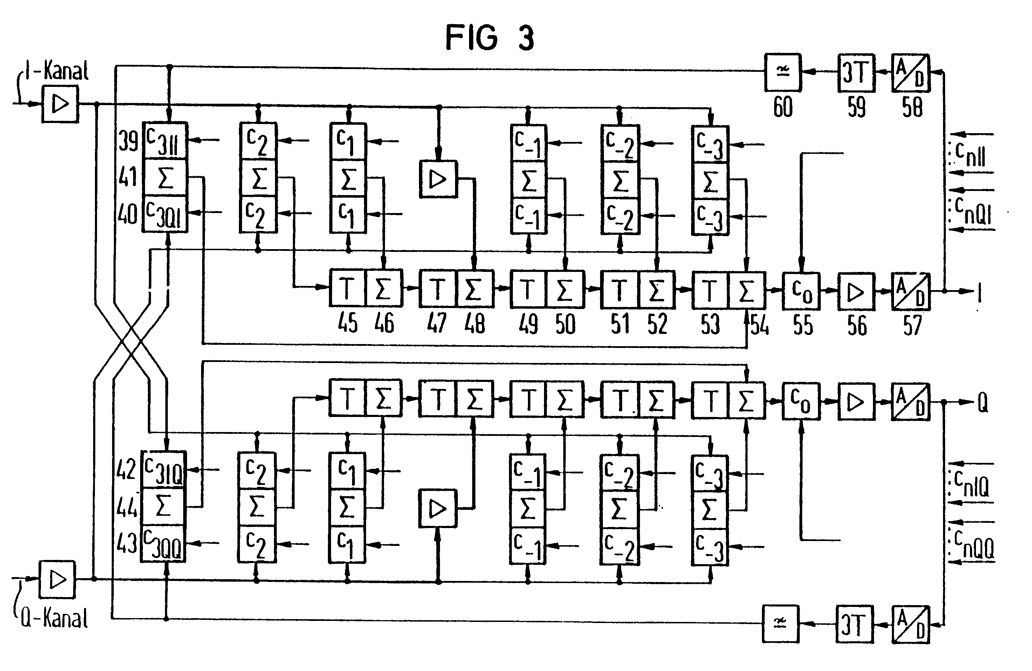

Figur 3 zeigt einen adaptiven komplexen Transversalentzerrer mit sechs Koeffizienten und einem entscheidungsrückgekoppelten Koeffizienten zur Reduktion der Rest-ISI, der nach der Parallel-In/Serial Out Struktur realisiert ist. Eine solche, für ein QAM-System vorgesehene komplexe Anordnung mit einem I- und einem Q-Kanal enthält in beiden Kanälen gleichartig ausgebildete Entzerrer. Da hierbei zugleich eine Kompensation von Übersprechen von einem auf den anderen Kanal vorzunehmen ist, sind in jedem Kanal jeweils zwei Koeffizienten gleicher Ordnung vorgesehen, die über ein Summierglied miteinander verbunden sind. Der Übersichtlichkeit wegen wurde der Teil der Schaltung, der die Erzeugung der Einstellgrößen (Koeffizienten) für die Einstellglieder betrifft, weggelassen, da er im wesentlichen dem entsprechenden Schaltungsteil in Figur 2 entspricht. Es ist lediglich durch Pfeile rechts in der Figur angedeutet, welche Koeffizienten den Einstellgliedern zugeführt werden. Der Rückkopplungspfad des Kanales I und Q ist jeweils an das Einstellglied mit den Koeffizienten $c_3$ im Entzerrer des eigenen Kanals geführt und zugleich, wegen der Kompensation des Übersprechens, an das zweite Einstellglied gleicher Ordnung im Entzerrer des anderen Kanals. Zur Verdeutlichung der unterschiedlichen Koeffizienten wurden die Koeffizienten $c_3$, an die die Rückkopplungspfade geführt sind, beispielhaft für alle anderen Koeffizienten mit zusätzlichen Indices versehen. Danach ist im I-Kanal der Koeffizient des oberen Einstellgliedes 39 mit $C_{3II}$ bezeichnet und im unteren Einstellglied 40 mit $c_{3QI}$, während im Q-Kanal der Koeffizient des oberen Einstellgliedes 42 die Bezeichnung $c_{3IQ}$ und des unteren Einstellgliedes 43 die Bezeichnung $c_{3QQ}$ trägt.

Die Entzerrer im I- und Q-Kanal sind gleichartig ausgebildet, so daß es zum Verständnis der Schaltung ausreicht, den Aufbau eines Entzerrers zu beschreiben. So sind im I-Kanal die Einstellglieder mit ihrem jeweils zugehörigen Summierglied eingangsseitig parallel zueinander angeordnet, während die Ausgänge an eine Serienschaltung von Verzögerungs- und Summiergliedern 45 bis 54 geführt werden. Das den beiden Einstellgliedern 39, 40 mit dem Koeffizienten $c_3$ zugehörige Summierglied 41 ist, ebenso wie das Summierglied 44 für die Einstellglieder 42, 43 mit dem Koeffizienten $c_3$ an das jeweils letzte Summierglied 54 der Serienschaltung angeschlossen, dem das Einstellglied 55 für den Koeffizienten $c_0$ nachgeschaltet ist. Dieses ist über einen Verstärker 56 mit dem A/D-Wandler 57 verbunden, von dessen Ausgang ein Rückkopplungspfad mit einer Schleifenlaufzeit $3T$ über einen D/A-Wandler 58, ein entsprechend dimensioniertes Verzögerungsglied 59 und einen Tiefpaß 60 an das Einstellglied 39 mit dem Koeffizienten $c_{3II}$ des I-Kanals und das Einstellglied 42 mit dem Koeffizienten $C_{3I}$ des Q-Kanals geführt ist.

Mit den erfindungsgemäßen Anordnungen ist ohne merkliche schaltungstechnische Aufwendungen eine gravierende Erhöhung der Entzerrerleistungsfähigkeit gegeben.

## Ansprüche

1. Adaptiver Transversalentzerrer, bestehend aus einer Anzahl von in Kette geschalteten Verzögerungsgliedern mit jeweils einer Verzögerungszeit $T$ entsprechend dem Abstand zweier aufeinanderfolgender gesendeter Zeichen und mit zwischen die Verzögerungsglieder und die Eingänge eines Summierers angeschlossenen $(m+n+1)$ Stellgliedern, deren Stellgrößen (Koeffizienten) vom Ausgangssignal des Entscheiders abgeleitet werden, wobei m die Zahl der negativ-indizierten Stellglieder (Vorläufer, precursors) und n die Zahl der positiv-indizierten Stellglieder (Nachläufer, postcursors) angibt, sowie mit einem ebenfalls linearen Hauptabgriff, die nach dem Zero-ForcingAlgorithmus eingestellt werden, oder bestehend aus der äquivalenten Anordnung, bei der an die Stellglieder das Eingangssignal parallel angelegt wird und die Ausgangssignale der Stellglieder im Abstand von $T$ in die Laufzeitkette eingespeist werden, **dadurch gekennzeichnet**, daß mindestens ein bzw. i zusätzliche positiv-indizierte entscheidungsrückgekoppelte Koeffizienten im Anschluß an den Zugriffsbereich des linearen Transversalfilters vorgesehen sind, dessen bzw. deren Schleifenlaufzeit(en) $(n+j) T$ mit $j = 1, ...i$ entsprechen, worin m eine ganze Zahl $\geq 0$ ist, i eine ganze Zahl $\geq 1$ und n eine ganze Zahl $\geq 1$.

2. Transversalentzerrer nach Anspruch 1, **dadurch gekennzeichnet**, daß bei seiner Ausbildung als komplexer Transversalentzerrer mit gleichartig ausgebildeten Entzerrern im I- und Q-Kanal Rückkopplungspfade vom Entscheiderausgang jedes Kanales zum betreffenden Einstellglied des eigenen und des anderen Kanals geführt sind.

## Claims

1. Adaptive transverse equalizer, comprising a plurality of interactively connected time delay elements each having a delay time $T$ in accordance with the spacing of two characters sent in succession, and having $(m+n+1)$ control elements connected between the time delay elements and the inputs of a summer, the manipulated variables (coefficients) of which control elements are derived from the output signal of the decision stage, m being the number of negatively indexed control elements (precursors) and n being the number of positively indexed control elements (postcursors), and also having a likewise linear main tap which is set in accordance with the zero-forcing algorithm, or comprising the equivalent arrangement in which the input signal is applied in parallel to the control elements and the output signals of the control elements are fed into the delay line with the spacing of $T$, characterized in that at least one or i additional positively indexed decision-feedback coefficients are provided following the access region of the linear transverse filter, the loop transit time or loop transit times $(n+j) T$ of which correspond with $j = 1, ...i$, where m is a whole number $\geq 0$, i is a whole number $\geq 1$ and n is a whole number $\geq 1$.

2. Tranverse equalizer according to Claim 1, characterized in that, where it is designed as complex transverse equalizer having identically designed equalizers in the I-channel and Q-channel, feedback paths are conducted from the decision stage output of each channel to the corresponding control element of the same channel and of the other channel.

## Revendications

1. Égaliseur transversal adaptatif, constitué par un certain nombre de circuits de retardement branchés selon un montage itératif et produisant chacun un retard T correspondant à l'intervalle entre deux signes successifs émis, et comportant (m+n+1) circuits de réglage, qui sont branchés entre les circuits de retardement et les entrées d'un additionneur et dont les grandeurs de réglage (coefficients) sont dérivées du signal de sortie du discriminateur, m étant le nombre des organes de réglage (précurseurs, precursors) affectés d'indices négatifs et n le nombre des organes de réglage (précurseurs aval, postcursors) affectés d'indices positifs, et comportant une prise principale également linéaire, qui est réglée conformément à l'algorithme de zéro-forcing (forçage à zéro), ou constitué par le dispositif équivalent, dans lequel le signal d'entrée est appliqué en parallèle aux circuits de réglage et les signaux de sortie des circuits de réglage sont introduits à un intervalle T dans la chaîne des temps de propagation, caractérisé par le fait qu'au moins un ou i coefficients supplémentaires, affectés d'indices positifs, et transmis par couplage par réaction avec discrimination, sont prévus à la suite de la zone d'accès du filtre transversal linéaire, dont le ou les temps de propagation de boucle correspondent à (n+j) T avec j = 1, ...i, m étant un nombre entier ≥ 0, i un nombre entier ≥ 1 et n un nombre entier ≥ 1.

2. Égaliseur transversal suivant la revendication 1, caractérisé par le fait que, dans le cas de sa réalisation sous la forme d'un égaliseur transversal complexe possédant des égaliseurs ayant des constitutions identiques dans le canal I et dans le canal Q, des voies de réaction s'étendent depuis la sortie du discriminateur de chaque canal jusqu'au circuit de réglage considéré du canal respectif et de l'autre canal.

## FIG 1a

## FIG 1c

## FIG 1b

## FIG 1d

FIG 2

## FIG 3